# EUROPÄISCHE PATENTSCHRIFT

(11) **EP 2 490 854 B1**
(45) Veröffentlichungstag und Bekanntmachung des Hinweises auf die Patenterteilung: **10.05.2017**
(21) Anmeldenummer: 10775717.1
(22) Anmeldetag: 22.10.2010
(51) Int. Cl.: B23P 13/00, B23B 41/00, B23Q 3/06, B64F 5/00, B23B 35/00

(54) **VERFAHREN ZUR HERSTELLUNG EINES FRACHTTORS**
METHOD FOR PRODUCING A FREIGHT DOOR
PROCÉDÉ DE FABRICATION D'UNE PORTE CARGO

(30) Priorität: 23.10.2009 DE 102009050478
(43) Veröffentlichungstag der Anmeldung: 29.08.2012
(73) Patentinhaber: Airbus SAS, 31700 Blagnac (FR)
(72) Erfinder: HECKL, Matthias, 86607 Donauwörth (DE); HÖNLE, Christian, 86650 Wemding (DE); HESTERMANN, Fritz, 82041 Oberhaching/Deisenhofen (DE); STALLA, Reinhold, 86637 Wertingen (DE)
(74) Vertreter: Marschall, Stefan
(86) Internationale Anmeldenummer: PCT/EP2010/006484
(87) Internationale Veröffentlichungsnummer: WO 2011/047879

(56) Entgegenhaltungen:
- EP-A2- 0 338 117
- WO-A1-84/01761
- DE-A1- 3 503 948
- DE-A1-102007 053 554
- GB-A- 1 187 736
- JP-A- 2000 054 027
- US-A- 4 758 030
- US-A- 4 967 947
- US-A- 6 141 848

## Beschreibung

Die Erfindung betrifft ein Verfahren zur Herstellung eines Frachttors.

Frachttore im Flugzeugbau sind häufig in Differentialbauweise hergestellt und weisen zwei Hautfelder auf, zwischen denen eine Versteifungsstruktur aus einer Vielzahl von Spanten und Stringern angeordnet ist. Sie sind häufig im Bereich einer Oberkante um eine Scharnierachse verschenkbar gelagert. Die Verriegelung des Fracht-tores erfolgt über eine Vielzahl von Haken, die im Bereich einer Unterkante des Frachttores angeordnet sind. Die Verstellung der Haken sowie deren Verriegelung erfolgt über eine Antriebswelle und eine sich parallel zur Antriebswelle erstreckende Sicherungswelle, die jeweils in Spantgabeln geführt sind.

Ein bekanntes Verfahren zur Herstellung eines derartigen Frachttors 2 ist in den Figuren 1 bis 3 gezeigt. Gemäß Fig. 1 werden zuerst die Spanten 4 parallel zueinander angeordnet und die bereits vorhandenden Spantbohrungen 6 incl. Buchsen 8 zueinander fluchtend ausgerichtet. Anschließend wird wie in Figur 2 gezeigt die Versteifungsstruktur 12 auf dem äußeren Hautfeld 14 ausgebildet und mit diesem vernietet. Durch das Vernieten der Einzelteile 4, 8 wird Spannung in das Frachttor 2 eingebracht, sobald dieses Frachttor 2 aus der Vernietungsvorrichtung herausgenommen wird. Das Frachttor 2 verzieht sich, so dass die Spantbohrungen 6 und Buchsen 8 nicht mehr zueinander fluchtend, sondern versetzt zueinander ausgerichtet sind, was wie in Figur 3 gezeigt das Einsetzen einer Antriebswelle 10 in die Buchsen 8 erschwert.

Aus der GB 1,187,736 A ein Verfahren zur Anordnung von Blechen zur Ausbildung von Bohrungen mittels einer Funkenerosionsmaschine bekannt. Die WO 84/0 1761 A1 offenbart ein Frachttor eines Flugzeugs und einen Schwenkmechanismus zur Anbindung des Frachttors im Bereich eines Rumpfausschnitts.

Aufgabe der vorliegenden Erfindung ist, ein Verfahren zur Herstellung eines Frachttors mit zueinander fluchtenden Bohrungen, das die vorgenannten Nachteile beseitigt und die Herstellung von passgenauen Bohrungen erlaubt.

Diese Aufgabe wird gelöst durch ein Verfahren mit den Schritten des Patentanspruchs 1.

Bei einem Verfahren zur Einbringung von zumindest einem Bohrbild mit zumindest zwei zueinander fluchtenden Bohrungen in ein Bauteil, das aus einer Vielzahl von Einzelkörper zusammengesetzt ist und bei dem die Bohrungen in voneinander getrennten Körperabschnitten ausgebildet sind, werden zuerst die Körperabschnitte zueinander angeordnet, wobei vorzugsweise bereits Vorbohrungen bzw. keine Vorbohrungen bei kleinen Enddurchmessern in diesen ausgebildet sind. Anschließend wird das Bauteil gefügt und gerichtet. Danach wird das Bauteil spannungsfreie in einer Vorrichtung positioniert und die Bohrungen werden endgebohrt.

An dem Verfahren ist insbesondere vorteilhaft, dass die Richtarbeiten des Bauteils vor dem Endbohren erfolgen, so dass die endgebohrten Bohrungen keiner Positionsveränderung unterliegen und sich somit kein Bohrversatz ausbilden kann. Dabei bewirkt das spannungsfreie Positionieren des Bauteils, dass das Bauteil keiner zum Beispiel elastischen Verformung unterliegt, so dass sich das Bauteil nach der Entnahme aus der Vorrichtung nicht nachteilig entspannen kann, was zu einem Versatz der endgebohrten Bohrungen führen könnte. Das Vorbohren der Bohrungen bewirkt insbesondere, dass bereits ein gewisser Materialquerschnitt abgetragen ist, so dass das Endbohren vereinfacht und die Standzeit der Schneidwerkzeuge verlängert ist.

Beispielsweise wird das Bauteil über bauteilseitige Lagerabschnitte in der Vorrichtung positioniert. Dies hat den Vorteil, dass keine speziellen Aufnahmen an dem Bauteil angebracht werden müssen. Beispielsweise erlauben die Lagerabschnitte eine Positionierung des Bauteils in seiner späteren Einbaulage, so dass zum Beispiel Verformungen des Bauteils aufgrund seiner Gewichtskraft beim Endbohren berücksichtigt werden können. Vorzugsweise definieren die Lagerabschnitte eine Schwenkachse, um die das Bauteil in seine Einbaulage verschwenkbar ist.

Beispielsweise wird zumindest ein weiteres Bohrbild mit zueinander fluchtenden Bohrungen in den Körperabschnitten ausgebildet. Zur Reduzierung der Durchlaufzeit des Bauteils ist es vorteilhaft, wenn auch diese Bohrungen in den voneinander getrennten Körperabschnitten vorgebohrt - sofern noch nicht vorhanden - und anschließend nach der Montage und dem Richten des Bauteils endgebohrt werden.

Bei einem erfindungsgemäßen Verfahren zur Herstellung eines Frachttors, insbesondere eines Luft- und Raumfahrzeugs, das um eine Scharnierachse verschwenkbar lagerbar ist und zumindest ein Hautfelds aufweist, an dem eine Versteifungsstruktur aus einer Vielzahl von Steifen angeordnet ist, wobei in einigen der Steifen zwei Bohrbildern ausgebildet sind, die jeweils zueinander fluchtende Bohrungen aufweisen, werden zuerst die die Bohrbilder aufnehmenden Steifen zueinander angeordnet, wobei vorzugsweise entsprechende Vorbohrungen bereits in den Steifen ausgebildet sind. Anschließend wird das Frachttor durch Ausbilden der Versteifungsstruktur und Verbinden derselben mit dem Hautfeld hergestellt. Nach der Montage des Frachttors wird es ausgerichtet und seine Sollgeometrie eingestellt. Dann wird es spannungsfrei in einer Bohrvorrichtung gelagert und in seine Einbaulage überführt. Danach werden die Bohrbilder endgebohrt.

An diesem Verfahren ist insbesondere die spannungsfreie Lagerung des gerichteten Frachttors in Kombination mit der Überführung in eine einbaulagenahe Position bzw. optimalerweise in eine Einbaulage vorteilhaft. Dies erlaubt, dass zum Beispiel Verformungen des Frachttors aufgrund seiner Gewichtskraft beim Endbohren berücksichtigt werden und somit Verspannungen beim Einbau des Frachttors in zum Beispiel einen Rumpfausschnitt eines Flugzeugs ausgeschlossen sind. Das Frachttor und seine notwendige Kinematik wie Antriebswellen und Sicherungswellen können quasi spannungsfrei in dem Rumpfauschnitt angeordnet werden. Dabei erlaubt das erfindungsgemäße Verfahren nicht nur eine hohe Passgenauigkeit der Bohrungen eines Bohrbildes untereinander, sondern auch die exakte zum Beispiel parallele Anordnung der Bohrbilder zueinander. Das Vorbohren der Bohrungen bewirkt insbesondere, dass bereits ein gewisser Materialquerschnitt abgetragen ist, so dass das Endbohren vereinfacht und die Standzeit der Schneidwerkzeuge verlängert wird.

Bei einem Ausführungsbeispiel stützt sich das Frachttor über seine Hakenbohrungen in der Bohrvorrichtung ab. Eine derartige Lagerung erleichtert die Überführung des Frachttors in seine Einbaulage, da sich das Frachttor aufgrund seiner Gewichtskraft quasi selbsttätig in seiner Einbaulage positioniert und nur entsprechend abgestützt werden muss.

In den Bohrbildern wird vorzugsweise eine Antriebswelle zur Verstellung der Haken bzw. eine Sicherungswelle zum Sichern der Haken in ihrer Verriegelungsposition über Buchsen gelagert. Dabei können die Buchsen einzeln in die Bohrungen eingesetzt werden oder zuvor auf der jeweiligen Welle positioniert und dann durch Einführen der Welle in das jeweilige Bohrbild in den Bohrungen angeordnet werden.

Bevorzugterweise werden Scharnierelemente zur Ausbildung einer Scharnierachse dann an dem Frachttor befestigt, wenn sich dieses in seiner Einbaulage befindet. Diese Vorgehensweise erlaubt es, die Scharnierelemente in der Bohrvorrichtung vorzupositionieren und Toleranzen rechtzeitig zu erkennen, so dass diese durch zum Beispiel Unterlegscheiben ausgeglichen werden können. Bei einem Ausführungsbeispiel werden die Scharnierelemente in der Bohrvorrichtung entsprechend ihrer Sollposition, d.h. entsprechend der Sollposition einer Scharnierachse zum Frachttor, positioniert, wobei die Einbaulage des Frachttors abgebildet wird. Dann werden Toleranzen zwischen den Scharnierelementen und dem Frachttors ausgeglichen und Befestigungslöcher in die Scharnierelemente und in das Frachttor eingebracht. Anschließend werden die Scharnierelemente über in die Befestigungslöcher eingesetzte Befestigungsmittel wie Nieten oder Schrauben mit dem Frachttor verbunden.

Bei einem Ausführungsbeispiel werden die Bohrungen der Bohrbildern in jeweils einen Schenkel einer Steifengabel eingebracht, wobei zwischen den beiden Schenkeln einer Steifegabel ein Bohrkopf mit diametral eingespannten Bohrern angeordnet wird. Dann wird die Bohrung in dem einen Schenkel endgebohrt. Anschließend führt der Bohrkopf eine rückwärtige Bewegung aus und die Bohrung in dem anderen Schenkel wird endgebohrt. Dieses Verfahren erlaubt die Verwendung von kurzen Bohrern, so dass die Bohrungen hochpräzise ausführbar sind. Taumelbewegungen bzw. Versatzbewegungen wie bei einer durchgehenden langen Spindel werden vermieden. Der Bohrkopf kann mit identischen Bohrern oder mit Bohrern mit gegenläufigen Schneiden ausgerüstet werden, wobei bei der Verwendung von identischen Schneidwerkzeugen deren Drehrichtung vor dem Endbohren der Bohrung in dem zweiten Schenkel geändert wird.

Ein Frachttor ist nach einem der vorbeschriebenen erfindungsgemäßen Verfahren hergestellt und hat zumindest zwei parallel zueinander verlaufende Bohrbilder, die jeweils eine Vielzahl von zueinander fluchtenden Bohrungen aufweisen.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:

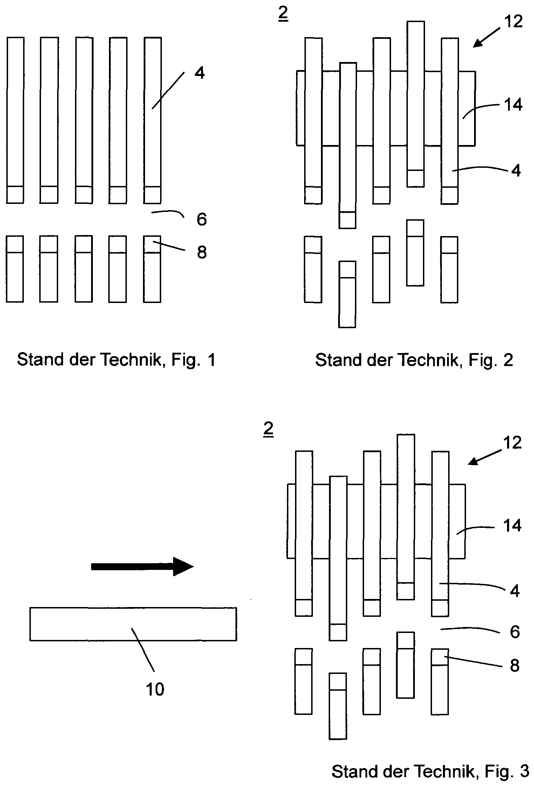

- Fig. 1-3: ein bekanntes Verfahren zur Herstellung eines Frachttors,

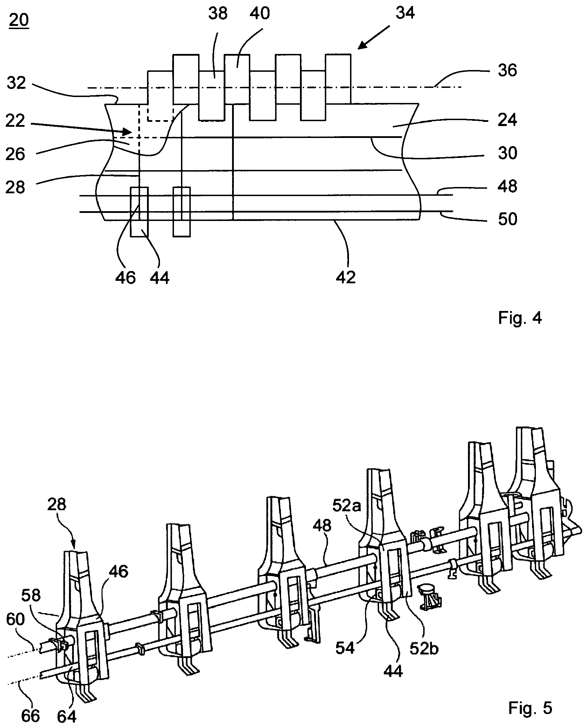

- Fig. 4: eine Seitenansicht eines Frachttors,
- Fig. 5: eine Kinematik zur Ansteuerung von in Fig. 4 gezeigten Haken,

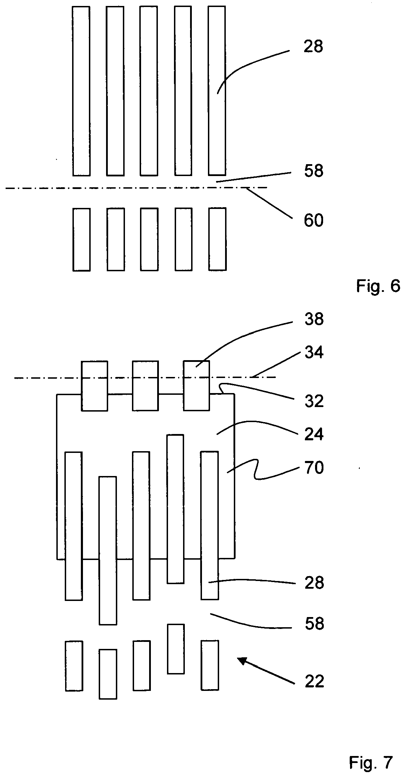

- die Fig. 6-9: ein erfindungsgemäßes Verfahren zur Herstellung des Frachttors in Fig. 4, und

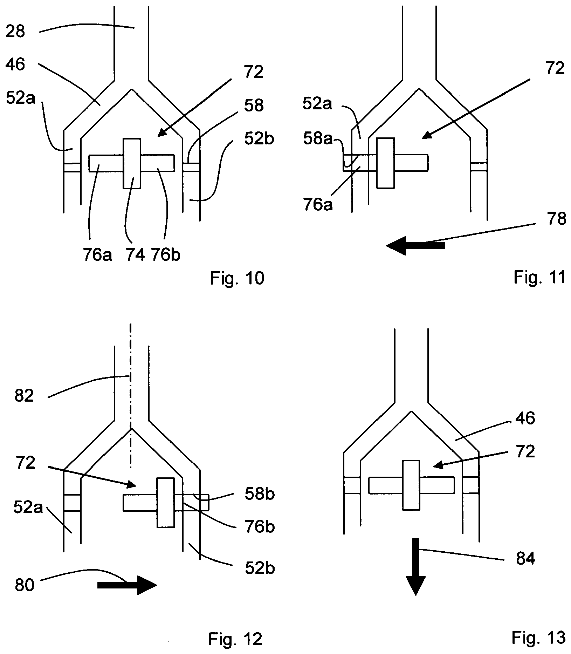

- Fig. 10-13: eine erfindungsgemäße Ansteuerung eines Bohrkopfs.

In den Figuren tragen gleiche konstruktive Elemente die gleichen Bezugsziffern, wobei bei mehreren gleichen konstruktiven Elementen in einer Figur aus Gründen der Übersichtlichkeit nur einige dieser konstruktiven Elemente mit einem Bezugszeichen versehen sind.

Gemäß der seitlichen Schnittdarstellung nach Fig. 4 weist ein Frachttor 20 eines Flugzeugs eine Versteifungsstruktur 22 auf, die zwischen zwei Hautfeldern 24, 26 angeordnet ist. Die Versteifungsstruktur 22 dient zur Versteifung der Hautfelder 24, 26 bzw. des Frachttors 20 und weist eine Vielzahl von Spanten 28 und eine Vielzahl von Stringern 30 auf. Die Spanten 28 bzw. die Stringer 30 verlaufen in Umfangs- bzw. Längsrichtung des Frachttors 20 und sind jeweils parallel voneinander beabstandet. Das Frachttor 20 ist in einen Rumpfausschnitt des Flugzeugs eingesetzt und im Bereich seiner Oberkante 32 über ein Klavierscharnier 34 verschwenkbar um eine Scharnierachse 36 gelagert. Das Scharnier 34 wird von torseitigen Scharnierelementen 38 sowie von rumpfseitigen Scharnierelementen 40 gebildet, die in Längsrichtung des Frachttores 20 abwechselnd nebeneinander angeordnet sind.

Eine Verriegelung des Frachttores 20 in dem Rumpfausschnitt erfolgt im Bereich einer Unterkante 42 über eine Vielzahl von Haken 44. Die Haken 44 sind jeweils an einen freien Endabschnitt 46 der Spanten 28 angeordnet und über eine sich parallel zur Scharnierachse 36 erstreckende Antriebswelle 48 verstellbar sowie über eine sich parallel zur Antriebswelle 48 erstreckende Sicherungswelle 50 in der verriegelten Position sicherbar.

Gemäß der Darstellung in Fig. 5 sind die freien Endabschnitte 46 der Spanten 28 als Spantgabeln mit jeweils zwei voneinander beabstandeten Schenkeln 52a, 52b ausgeführt. Die Haken 44 sind jeweils über einen in ein Hakenbohrungspaar 54 eingesetzten Bolzen (nicht beziffert) verschwenkbar zwischen den Schenkeln 52 gelagert.

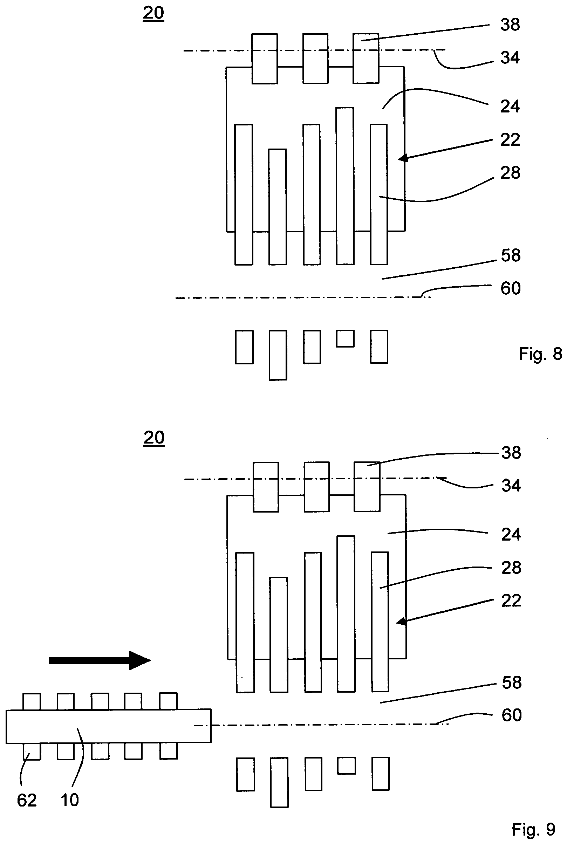

Die Antriebswelle 48 ist in einem Bohrbild aus einer Vielzahl von zueinander fluchtenden Bohrungen 58 mit einer gemeinsamen Bohrungsachse 60 geführt, die sich ebenfalls durch die Schenkel 52a, 52b erstrecken. Zur Lagerung der Antriebeswelle 48 in den Bohrungen 60 sind entsprechende Buchsen 62 (s. Figur 9) vorgesehen. Die Sicherungswelle 50 ist in einem Bohrbild aus einer Vielzahl von zueinander fluchtenden Bohrungen 64 mit einer gemeinsamen Bohrungsachse 66 geführt, die zwischen den Hakenbohrungen 54 und den Bohrungen 58 für die Antriebswelle 48 angeordnet sind.

Im Folgenden wird ein erfindungsgemäßes Verfahren zur Herstellung des Frachttores 20 in Figur 1 erläutert.

Gemäß Fig. 6 werden zuerst die Spanten 28 parallel voneinander beabstandet. Dann werden die Bohrungen 58 für die Antriebswelle 48 und die Bohrungen 64 für die Sicherungswelle 50 (nicht gezeigt in den Figuren 6 bis 13, vgl. Fig. 5) vorgebohrt. Die Vorbohrungen können jedoch auch schon ausgebildet sein bzw. bei kleinen Durchmessern kann ganz auf Vorbohrungen verzichtet werden. Ebenso sind die Hakenbohrungen 54 zur Aufnahme der Hakenbolzen in den Spanten 28 in den Figuren 6 bis 13 nicht gezeigt. Bevorzugterweise werden die Hakenbohrungen 54 vor der Positionierung der Spante 28 nebeneinander in diese eingebracht. Das Vorbohren der Bohrungen 58, 64 erfolgt jeweils über eine durchgehende Spindel, so dass die Bohrungen 58, 64 jeweils zueinander fluchtend mit einer gemeinsamen Längsachse 60, 66 angeordnet sind.

Nach dem Vorbohren der Bohrungen 58, 64 wird die Versteifungsstruktur 22 an dem äußeren Hautfeld 24 aufgebaut und mit diesem verbunden. Anschließend wird das Hautfeld 24 mit der Versteifungsstruktur 22 gerichtet und in seine Sollform bzw. seine Endgeometrie überführt. Als Ergebnis des Richtvorgangs sind wie in Figur 7 gezeigt die Spante 8 derart in Längsrichtung zueinander versetzt angeordnet, dass die vorgebohrten und fluchtenden Bohrungen 58, 64 nun einen deutlichen Bohrungsversatz aufweisen und jeweils keine gemeinsame Bohrungsachse 60, 66 (vgl. Fig. 5 und 6) mehr bilden.

Das über die Verstärkungsstruktur 22 verstärkte und gerichtete Hautfeld 24 bzw. gerichtete Frachttor 20 wird in einer CNCgesteuerten Wellenbohr- und Spindelanlage - im Folgenden Bohrvorrichtung genannt - vertikal positioniert und über seine Hakenbohrungen 54 spannungsfrei in einer Aufnahmeeinrichtung der Bohrvorrichtung verschwenkbar um eine Schwenkachse gelagert, wobei sein Schwerpunkt oberhalb der Schwenkachse angeordnet ist. Dabei simuliert die Schwenkachse die Bolzenachse der Haken 44 (vgl. Fig. 4) Dann wird das das Frachttor 20 in seine Einbaulage bzw. in eine einbaulagennahe Position verschwenkt, die seiner Verriegelungsposition in dem Rumpfausschnitt entspricht. In dieser Position ist das Frachttor 20 strakgenau ausgerichtet und Verformungen, beispielsweise durch die eigene Gewichtskraft, werden im weiteren Verfahren berücksichtigt. Mit anderen Worten, in der simulierten Einbaulage wird das Frachttor 20 im Wesentlichen den Belastungen ausgesetzt, die im eingebauten und geschlossenen Zustand auftreten. Hierdurch werden die Belastungen bereits bei der Ausbildung der Kinematik berücksichtigt und die Bohrungen 58, 64 können entsprechend eingestellt werden.

Anschließend werden wie in Figur 7 gezeigt die torseitigen Scharnierelemente 38 im Bereich der Oberkante 32 an dem Hautfeld 24 befestigt. Die Scharnierelemente 38 wurden bereits zuvor in einer Halteeinrichtung der Bohrvorrichtung entsprechend ihrer Sollposition positioniert. Dabei wird der Abstand bzw. der Verlauf der Scharnierachse 34 in der Bohrvorrichtung zum Frachttor 20 in seiner Einbaulage simuliert und die Scharnierelemente 38 an dieser Scharnierachse 34 zueinander an einer Innenfläche 70 des Frachttor 20 ausgerichtet. Toleranzen zwischen dem Hautfeld 24 und den Scharnierelementen 38 werden über entsprechende Materialstreifen bzw. Unterlegscheiben, Distanzstücke und drgl. ausgeglichen. Dann wird ein CNC-gesteuerter Bohrkopf gegenüber einer von dem Betrachter abgewandten Außenfläche des Hautfelds 24 positioniert und es werden Befestigungslöcher zur Befestigung der Scharnierelemente 38 in das Hautfeld 24 sowie in das jeweilige Scharnierelement 38 eingebracht. Der Bohrkopf kann als ein multifunktionaler Bearbeitungskopf ausgeführt sein, der ebenfalls das Vernieten ermöglicht. Grundsätzlich ist er bei beliebiger Lage des Hautfelds 24 bzw. der Außenfläche einsetzbar.

Die Befestigung der Scharnierelemente 38 an dem Hautfeld 24 erfolgt bevorzugterweise über Nieten, deren Köpfe in entsprechende hautfeldseitige trichterfömige Senkungen eintauchen, so dass eine aerodynamisch günstige Außenfläche geschaffen ist. Die Senkungen werden während des Bohrprozesses ausgebildet, wobei der Bohrkopf mit einer entsprechenden Messeinrichtung zur Messung einer jeweiligen Senktiefe ausgerüstet ist. Die Messeinrichtung weist vorzugsweise eine Sensorik auf, die einen Stromanstieg des Spindelantriebs des Bohrkopfs misst und den Bohrvorgang stoppt, sobald die geforderte Senktiefe erreicht ist. Die Senktiefe kann jedoch auch mittels Körperschall ermittelt werden. Nach dem Bohren der Befestigungslöcher werden diese entsprechend gereinigt und die Scharnierelemente 38 werden über Befestigungsmittel wie Nieten an dem Hautfeld 24 angebunden.

Gleichzeitig zur Ausrichtung und Anbindung der Scharnierelemente 38 werden über einen weiteren CNC-gesteuerter Bohrkopf 72 die Bohrungen 58, 64 jeweils auf ein Endmaß endgebohrt (vgl. Figuren 10 bis 13). Dabei wurde der Vorbohrdurchmesser derart gewählt, dass wie in Figur 8 gezeigt nach dem Endbohren die Bohrungen 58, 64 wieder fluchtend mit jeweils einer gemeinsamen Bohrungsachse 60, 66 ausgerichtet sind. Insbesondere ist das Endmaß der Bohrungen 58, 64 so gewählt, dass wie in Figur 9 gezeigt die Antriebswelle 48 bzw. die Sicherungswelle 50 über Buchsen 62 in den Bohrungen 58, 64 gelagert werden kann. Bevorzugterweise werden die Buchsen 62 wie in Figur 10 gezeigt entsprechend dem Spantabstand auf den Wellen 48, 64 positioniert und dann zusammen als Einheit mit diesen in die Bohrungen 58 eingeführt. Nach dem Ausbilden der zueinander fluchtenden Bohrungen 58, 64 und dem Anschlagen der Scharnierelemente 38 ist die erfindungsgemäße Bearbeitung des Frachttors 20 in der Bohrvorrichtung beendet. Die Kinematik 48, 50 kann montiert und das Frachttor 22 über die Anbindung eines innenseitigen Hautfeldes 26 geschlossen werden (vgl. Fig. 4).

Gemäß Fig. 10 weist der Bohrkopf 72 zumindest zum Endbohren der Bohrungen 58 eine Antriebseinheit 74 mit zwei diametral angeordneten Spannelementen zum Einspannen jeweils eines Bohrers 76a, 76b auf. Die Bohrer 76a, 76b sind identisch ausgebildet, können jedoch auch mit entgegengerichteten Schneiden ausgeführt sein. Zur Drehrichtungsumkehr weist der Bohrkopf 72 eine entsprechende nicht gezeigte Drehrichtungsumkehreinheit auf.

Zum Endbohren wird der Bohrkopf 72 in einer Ausgangslage zwischen den Schenkeln 52a, 52b der jeweiligen Spantgabel 46 angeordnet. Dann wird die Antriebseinheit 74 angesteuert und die Bohrer 76a, 76b werden in Rotation versetzt. Nun wird wie in Figur 11 gezeigt der Bohrkopf 72 aus seiner Ausgangslage gemäß dem Pfeil 78 in Richtung des linken Schenkels 52a bewegt und die Bohrung 58a mit dem linken Bohrer 76a wird in diesem Schenkel 52a endgebohrt.

Nach dem Endbohren der Bohrung 58a in dem linken Schenkel 52a wird die Bohrung 58b in dem rechten Schenkel 52b endgebohrt. Dies geschieht wie in Figur 12 gezeigt über eine Verfahrbewegung des Bohrkopfs 72 gemäß dem Pfeil 80 über seine Ausgangslage hinaus in eine Gegenrichtung zum rechten Schenkel 52b. Sobald der Bohrkopf 72 die Längsachse 78 des Spantes 8 überschritten hat, wird die Drehrichtung der Bohrer 76a, 76b umgesteuert. Nun drehen sich die Bohrer 76a, 76b in die entgegengesetzte Richtung und die Bohrung 58b in dem zweiten Schenkel 52 wird über den rechten Bohrer 76b endgebohrt. Selbstverständlich kann auch zuerst die Bohrung 58b in dem rechten Schenkel 52b und anschließend die Bohrung 58a in dem linken Schenkel 52a endgebohrt werden. Nach dem Endbohren der Bohrung 58b wird der Bohrkopf 72 zurück in seine Ausgangslage bewegt und wie beispielhaft durch Pfeil 84 angedeutet aus der Spantgabel 46 herausgeführt. Dann wird der Bohrkopf 72 in einer benachbarten Spantgabel 46 positioniert und die dortigen Bohrungen 58a, 58b werden entsprechend ausgebildet.

Das Endbohren der Bohrungen 64 für die Sicherungswelle kann über den gleichen Bohrkopf 72 verfügen. Die Bohrvorrichtung kann jedoch auch über zumindest einen zweiten CNC-Bohrkopf mit diametral angeordneten Schneidwerkzeugen verfügen.

### Bezugszeichenliste

- 2: Frachttor
- 4: Spant
- 6: Spantbohrung
- 8: Buchse
- 10: Antriebswelle
- 12: Versteifungsstruktur
- 14: Hautfeld
- 16: Hautfeld
- 20: Frachttor
- 22: Versteifungsstruktur
- 24: Hautfeld
- 26: Hautfeld
- 28: Spant
- 30: Stringer
- 32: Oberkante
- 34: Scharnier
- 36: Scharnierachse
- 38: torseitiges Scharnierelement
- 40: rumpfseitiges Scharnierelement
- 42: Unterkante
- 44: Haken
- 46: Endabschnitt
- 48: Antriebswelle
- 50: Sicherungswelle
- 52: Schenkel
- 54: Hakenbohrung
- 58: Bohrung
- 60: Bohrungsachse
- 62: Buchse
- 64: Bohrung
- 66: Bohrungsachse
- 70: Außenfläche
- 72: Bohrkopf
- 74: Antriebseinheit
- 76: Schneidwerkzeug
- 78: Bewegungsrichtung
- 80: Gegenrichtung
- 82: Längsachse Spant
- 84: Ausrückbewegung

## Patentansprüche

1. Verfahren zur Herstellung eines Frachttors (20), das um eine Scharnierachse (34) verschwenkbar lagerbar ist und zumindest ein Hautfeld (24) aufweist, an dem eine Versteifungsstruktur (22) aus einer Vielzahl von Steifen (28, 30) angeordnet ist, von denen zumindest einige zumindest zwei Bohrbildern aufweisen, die jeweils zueinander fluchtende Bohrungen (58, 64) zeigen, mit den Schritten:
- Anordnen der Steifen (28) zueinander,
- Ausbilden der Versteifungsstruktur (22) an dem zumindest einem Hautfeld (24),
- Richten des Frachttors (20),
- spannungsfreies Lagern des Frachttors (20) in einer Bohrvorrichtung,
- Überführen des Frachttors (20) in seine Einbaulage, und
- Endbohren der Bohrbilder.

2. Verfahren nach Anspruch 1, wobei das Frachttor (20) über seine Hakenbohrungen (54) in der Bohrvorrichtung abgestützt wird.

3. Verfahren nach Anspruch 1 oder 2, wobei vor dem Einsetzen einer Welle (48, 50) in eines der endgebohrten Bohrbilder Buchsen (62) auf der Welle (48, 50) angeordnet werden.

4. Verfahren nach Anspruch 2 oder 3, wobei an dem Frachttor (20) in seiner Einbaulage Scharnierelemente (38) zur Ausbildung der Scharnierachse (34) befestigt werden.

5. Verfahren nach Anspruch 4, wobei die Scharnierelemente (38) an dem Frachttor (20) befestigt werden mit den Schritten:
- Positionieren der Scharnierelemente (38) in der Bohrvorrichtung entsprechend ihrer Sollposition zum Frachttor (20),
- Ausgleich von Toleranzen zwischen den Scharnierelementen (38) und dem Frachttor (20),
- Einbringen von Befestigungslöchern in die Scharnierelemente (38) und in das Frachttor (20),
- Einsetzen von Befestigungsmitteln in die Befestigungslöcher.

6. Verfahren nach einem der vorhergehenden Ansprüche, wobei die Bohrungen (58, 64) der Bohrbilder in jeweils einen Schenkel (52) einer Steifengabel (46) mit zwei Schenkeln (52a, 52b) eingebracht werden, mit den Schritten:
- Positionieren eines Bohrkopfes (72) mit zwei diametral zueinander angeordneten Schneidwerkzeugen (76a, 76b) zwischen den Schenkeln (52, 52b),
- Endbohren der Bohrung (58a, 64a) in dem einen Schenkel (52a),
- Rückbewegung des Bohrkopfes (72), und
- Endbohren der Bohrung (58b, 64b) in dem anderen Schenkel (52b).

7. Verfahren nach Anspruch 6, wobei zwei identische Schneidwerkzeuge (76a, 76b) verwendet und über einen gemeinsamen Antrieb (74) angetrieben werden und die Drehrichtung der Schneidwerkzeuge (76a, 76b) vor dem Endbohren der Bohrung (58, 64) in dem zweiten Schenkel (52) geändert wird.

## Claims

1. Method of producing a freight door (20) which is borne pivotably about a hinge axis (34) and has at least one skin field (24) on which is arranged a stiffening structure (22) comprising a plurality of stiffeners (28, 30), of which at least some have at least two drill patterns which each exhibit drilled holes (58, 64) aligned with regard to each other, with the steps:
- arranging of the stiffeners (28) in relation to each other,
- forming the stiffening structure (22) on the at least one skin field (24),
- aligning of the freight door (20),
- tension-free bearing of the freight door (20) in a drilling device,
- transferring of the freight door (20) into its installation position and
- final drilling of the drill patterns.

2. Method according to claim 1 wherein the freight door (20) is supported via its hook borings (54) in the drilling device.

3. Method according to claim 1 or 2 wherein before the insertion of a shaft (48, 50) into one of the final drilled drill patterns, bushings (62) are arranged on the shaft (48, 50).

4. Method according to claim 2 or 3 wherein in its assembled condition, hinged elements (38) are attached to the freight door (2) in order to form a hinge axis (34).

5. Method according to claim 4 wherein the hinged elements (38) are attached to the freight door (20) with the steps:
- positioning of the hinged elements (38) in the drilling device in accordance with their target position in relation to the freight door (20),
- equalising tolerances between the hinged elements (39) and the freight door (20),
- introducing fastening holes into the hinged elements (38) and into the freight door (20)
- inserting fastening means into the fastening holes.

6. Method according to any one of the preceding claims wherein the drilled holes (58, 64) of the drill patterns are introduced into each leg (52) of a stiffener fork (46) with two legs (52a, 52b), with the steps:
- positioning of a drilling head (72)which two cutting tools (72a, 72b) arranged diametrically opposite each other between the legs (52, 52b),
- final drilling of the drilled hole (58, 64a) in the one leg (52a),
- return movement of the drilling head (72) and
- final drilling of the drill hole (58b, 64b) in the other leg (52b).

7. Method according to claim 6 wherein two identical cutting tools (76a, 76b) are used and actuated by means of a joint actuator (74) and the direction of rotation of the cutting tools (76a, 76b) is changed before the final drilling of the drill hole (58, 64) in the second arm (52).

## Revendications

1. Procédé destiné à fabriquer une porte cargo (20) susceptible de pivoter autour d'un axe de charnière (34) et qui comporte au moins une zone d'enveloppe (24) sur laquelle est placée une structure de rigidification (22) en une pluralité de raidisseurs (28, 30), dont au moins deux comportent deux gabarits de perçage qui désignent chacun des perçages (58, 64) alignés les uns sur les autres, présentant les étapes :
- du placement des raidisseurs (28) les uns par rapport aux autres,
- de la conception d'une structure de rigidification (22) sur l'au moins une zone d'enveloppe (24),
- du dressage de la porte cargo (20),
- du logement sans tension de la porte cargo (20) dans un dispositif de perçage,
- du transfert de la porte cargo (20) dans sa position de montage et
- du perçage final des gabarits de perçage.

2. Procédé selon la revendication 1, la porte cargo (20) étant soutenue par l'intermédiaire de ses trous à crochet (54) dans le dispositif de perçage.

3. Procédé selon la revendication 1 ou la revendication 2, lors duquel, avant l'insertion d'un arbre (48, 50) dans l'un des gabarits de perçage entière percés on place des douilles (62) sur l'arbre (48, 50).

4. Procédé selon la revendication 2 ou la revendication 3, lors duquel sur la porte cargo (20) dans sa position de montage, on fixe des éléments à charnière (38) pour créer l'axe de charnière (34).

5. Procédé selon la revendication 4, lors duquel on fixe les éléments à charnière (38) sur la porte cargo (20), comportant les étapes :
- du positionnement des éléments à charnière (38) dans le dispositif de perçage en fonction de leur position de consigne par rapport à la porte cargo (20),
- de la compensation de tolérances entre les éléments à charnière (38) et la porte cargo (20),
- du ménagement de trous de fixation dans les éléments à charnière (38) et dans la porte cargo (20),
- de l'insertion de moyens de fixation dans les trous de fixation.

6. Procédé selon l'une quelconque des revendications précédentes, lors duquel on ménage les perçages (58, 64) des gabarits de perçage dans chaque fois une branche (52) d'une fourche rigide (46) à deux branches (52a, 52b), comportant les étapes :
- du positionnement d'une tête de perçage (72) avec deux outils de coupe (76a, 76b) placés diamétralement l'un par rapport à l'autre entre les branches (52a, 52b),
- du perçage final du perçage (58a, 64a) dans l'une des branches (52a),
- du déplacement en retour de la tête de perçage (72) et
- du perçage final du perçage (58b, 64b) dans l'autre branche (52b).

7. Procédé selon la revendication 6, lors duquel on utilise deux outils de coupe (76a, 76b) identiques et on les entraîne par l'intermédiaire d'un entraînement (74) commun et on change le sens de rotation des outils de coupe (76a, 76b) avant le perçage final du perçage (58, 64) dans la deuxième branche (52).
